# EUROPEAN PATENT APPLICATION

(11) **EP 4 287 038 A1**
(43) Date of publication of application: **06.12.2023**
(21) Application number: 23175089.4
(22) Date of filing: 24.05.2023
(51) Int. Cl.: G06F 16/31

(54) **METHOD FOR DETECTING PATTERN AND SYSTEM THEREOF**

(30) Priority: 31.05.2022 KR 20220066492
(71) Applicant: Samsung Sds Co., Ltd.,, Seoul 05510 (KR)
(72) Inventor: Im, Jong In, Seoul 05510 (KR)
(74) Representative: Glawe, Delfs, Moll

(57) **Abstract**

A method for detecting a pattern and a system thereof are provided. The method according to some embodiments includes registering a detection pattern, the detection pattern being a pattern defined to detect where multiple detection tokens appear within a maximum token distance, acquiring target text, and performing pattern matching for the target text based on the detection pattern by sliding window.

## Description

### BACKGROUND

### 1. Field

The present disclosure relates to a method for detecting a pattern and system thereof, and more particularly, to a method capable of detecting part of text that matches a particular pattern and a system performing the method.

### 2. Description of the Related Art

Pattern detection techniques may be used to detect particular strings (or information) from any given text. Various pattern detection techniques, including a representative expression-based pattern detection technique, have been proposed so far. The regular expression-based pattern detection technique is a technique of defining a target string (e.g., the combination of tokens) to be detected as a regular expression using meta characters and performing pattern matching while searching through given text with the regular expression.

However, as the regular expression-based pattern detection technique conducts a search in a non-deterministic finite automation (NFA)-based backtracking method, in other words, as backtracking is performed whenever the pattern matching between the given text and the regular expression ends as a partial match), system failure may occur due to a shortage of resources. For example, as the number of partial matches increases, the amount of resources required for pattern matching increases exponentially. Thus, if the amount of available resources is insufficient, system failure may occur. Also, as some of the resources need to remain idle due to the risk of system failure, the utilization efficiency of the resources inevitably decreases considerably.

### SUMMARY

Aspects of the present disclosure provide a pattern detection method capable of improving the utilization efficiency of resources and a system performing the pattern detection method.

Aspects of the present disclosure also provide a pattern detection method capable of resource-efficiently detecting part of given text that matches a particular pattern and a system performing the pattern detection method.

Aspects of the present disclosure also provide a pattern detection method capable of detecting part of given text that matches a particular pattern at high speed and a system performing the pattern detection method.

Aspects of the present disclosure also provide a pattern detection method capable of performing pattern detection efficiently and stably in consideration of the state of resources and a system performing the pattern detection method.

However, aspects of the present disclosure are not restricted to those set forth herein. The above and other aspects of the present disclosure will become more apparent to one of ordinary skill in the art to which the present disclosure pertains by referencing the detailed description of the present disclosure given below.

According to an aspect of the present disclosure, there is provided a method for detecting a pattern performed in at least one computing device. The method includes registering a detection pattern, the detection pattern being a pattern defined to detect where detection tokens appear within a maximum token distance; acquiring target text; and performing pattern matching for the target text based on the detection pattern by using a sliding window.

In some embodiments, the detection pattern is defined based on a number of appearances of each of the detection tokens.

In some embodiments, the acquiring the target text may include acquiring entire text, determining whether there exists any associated text based on meta information of the entire text, and based on determining that there exists the associated text, extracting at least a part of the entire text that differ from the associated text as the target text.

In some embodiments, a size of the sliding window is determined based on the maximum token distance.

In some embodiments, the performing the pattern matching may include generating flag arrays for the detection tokens, wherein the flag arrays has indexes corresponding to tokens of the target text and include elements showing results of matching between the detection tokens and the target text, and performing the pattern matching while moving the sliding window over the flag arrays.

In some embodiments, the performing the pattern matching may include dividing the target text into a plurality of partial texts, which include first and second partial texts, and performing pattern matching in parallel for the plurality of partial texts.

In some embodiments, the performing the pattern matching may include predicting an amount of memory resources required for performing pattern matching for N partial texts (where N is a natural number of 2 or greater) based on a determination that there are N available worker nodes, controlling a number of partial texts of the target text to be K (where K is a natural number of 2 or greater and is less than N) in response to a determination that the predicted amount of memory resources exceeds an amount of available memory resources, dividing the target text into K partial texts, and performing pattern matching in parallel for the K partial texts using K available worker nodes.

In some embodiments, the performing the pattern matching may include predicting an amount of memory resources required for performing pattern matching for N partial texts (where N is a natural number of 2 or greater) based on a determination that there are N available worker nodes, dividing the target text into N partial texts based on a determination that the predicted amount of memory resources is less than or equal to an amount of available memory resources, and performing pattern matching in parallel for the N partial texts using N available worker nodes.

In some embodiments, the performing the pattern matching may include predicting an amount of memory resources required for performing pattern matching for entire target text, performing first pattern matching for first partial text of the target text based on a determination that the predicted amount of memory resources exceeds an amount of available memory resources, and performing second pattern matching for second partial text of the target text based on the first pattern matching being completed.

In some embodiments, the maximum token distance is a first maximum token distance, and wherein the performing the pattern matching may include registering, as an exception for the detection pattern, an exception pattern where at least one of the detection tokens appears together with an exception token, within a second maximum token distance, and performing the pattern matching using the detection pattern and the exception pattern.

According to another aspect of the present disclosure, there is provided a method for detecting a pattern performed in at least one computing device The method may include registering a detection pattern, the detection pattern being a pattern defined to detect where at least one detection token appears; registering, as an exception for the detection pattern, an exception pattern where the at least one detection token appears together with an exception token within a maximum token distance; acquiring target text; and performing pattern matching for the target text based on the detection pattern and the exception pattern by using a sliding window.

In some embodiments, the performing the pattern matching may include generating a first flag array for the detection pattern, wherein the first flag array has indexes corresponding to tokens of the target text and includes elements showing results of matching between the at least one detection token and the target text; generating a second flag array for the exception pattern, wherein the second flag array has indexes corresponding to the tokens of the target text and includes elements showing results of matching between the exception token and the target text; and performing the pattern matching while moving the sliding window over the first flag array and the second flag array.

In some embodiments, the performing the pattern matching may include determining whether there exists a first hit flag for the at least one detection token within the sliding window on the first flag array; determining whether there exists a second hit flag for the exception token within the sliding window on the second flag array based on a determination that the first hit flag exists; and moving the sliding window based on a determination that the second hit flag does not exist.

In some embodiments, a size of the sliding window may be determined based on the maximum token distance.

According to yet another aspect of the present disclosure, there is provided a system for detecting a pattern. The system may include at least one processor; and at least one memory configured to store computer program executable by the at least one processor, wherein the computer program, when executed by the at least one processor, causes the at least one processor to perform: registering a detection pattern, the detection pattern being a pattern defined to detect where detection tokens appear within a maximum token distance; acquiring target text; and performing pattern matching for the target text based on the detection pattern by using a sliding window.

### BRIEF DESCRIPTION OF THE DRAWINGS

The above and other aspects and features of the present disclosure will become more apparent by describing in detail exemplary embodiments thereof with reference to the attached drawings, in which:
FIG. 1 is a block diagram of a pattern detection system according to some embodiments of the present disclosure;
FIG. 2 illustrates an exemplary application of the pattern detection system of FIG. 1;
FIG. 3 is a flowchart illustrating a pattern detection method according to some embodiments of the present disclosure;
FIG. 4 is a flowchart illustrating the step of determining target text, performed in the pattern detection method of FIG. 3;
FIG. 5 is a flowchart illustrating the step of performing pattern matching, performed in the pattern detection method of FIG. 3;
FIGS. 6 and 7 illustrate how to perform pattern matching based on a detection pattern according to an embodiment of the present disclosure;
FIGS. 8 and 9 illustrate how to perform pattern matching based on a detection pattern and an exception pattern according to an embodiment of the present disclosure;
FIG. 10 is a flowchart illustrating a pattern detection method according to some embodiments of the present disclosure;
FIGS. 11 through 14 illustrate how to perform pattern matching in parallel based on a detection pattern and an exception pattern according to an embodiment of the present disclosure;
FIG. 15 is a flowchart illustrating a pattern detection method according to some embodiments of the present disclosure; and
FIG. 16 is a block diagram of an exemplary computing device that implements a pattern detection system according to some embodiments of the present disclosure.

### DETAILED DESCRIPTION

Hereinafter, example embodiments of the present disclosure will be described with reference to the attached drawings. Advantages and features of the present disclosure and methods of accomplishing the same may be understood more readily by reference to the following detailed description of example embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will be defined by the appended claims and their equivalents.

In adding reference numerals to the components of each drawing, it should be noted that the same reference numerals are assigned to the same components as much as possible even though they are shown in different drawings. In addition, in describing the present disclosure, when it is determined that the detailed description of the related well-known configuration or function may obscure the gist of the present disclosure, the detailed description thereof will be omitted.

Unless otherwise defined, all terms used in the present specification (including technical and scientific terms) may be used in a sense that can be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the disclosure. In this specification, the singular also includes the plural unless specifically stated otherwise in the phrase.

In addition, in describing the component of this disclosure, terms, such as first, second, A, B, (a), (b), may be used. These terms are only for distinguishing the components from other components, and the nature or order of the components is not limited by the terms. If a component is described as being "connected," "coupled" or "contacted" to another component, that component may be directly connected to or contacted with that other component, but it should be understood that another component also may be "connected," "coupled" or "contacted" between each component.

Embodiments of the present disclosure will be described with reference to the attached drawings.

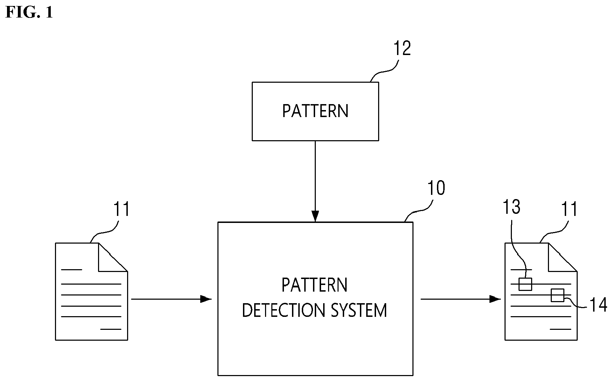

FIG. 1 is a block diagram of a pattern detection system according to some embodiments of the present disclosure.

Referring to FIG. 1, a pattern detection system 10 may be a system for detecting parts 13 and 14 of target text 11 that match a particular pattern 12. For example, the pattern detection system 10 may detect the matching parts 13 and 14 for the pattern 12 from text such as a document or email. For convenience, the pattern detection system 10 may also be referred to as the detection system 10.

The type of the target text 11, which is text to be subjected to pattern detection, is not particularly limited. For example, the target text 11 may be text extracted from (or included in) email, a document, a social networking service (SNS) message, a post or comment, or an instant message, but the present disclosure is not limited thereto.

The pattern 12 may refer to a rule defining a target to be detected or part to be excluded from the target. The pattern 12 may include a detection pattern and an exception pattern. Here, the detection pattern may be used to detect particular parts of the target text 11, and the exception pattern may be used to treat particular parts of the target text 11 as detection exceptions. Each of the detection pattern and the exception pattern may be defined based on at least one token, but a method to define the detection pattern and the exception pattern may vary.

For example, the detection pattern may be defined based on one or more detection tokens. In this example, the detection pattern may be used to detect where the detection tokens appear in the target text 11.

In another example, the detection pattern may be based on multiple detection tokens and the maximum token distance of the detection pattern. In this example, the detection pattern may be used to detect parts of the target text 11, within the maximum token distance of the detection pattern, where the detection tokens appear. The maximum token distance of the detection pattern may be defined as 1 added to the number of tokens present between the detection tokens, but the present disclosure is not limited thereto.

In another example, the detection pattern may be defined based on the number of appearances of each of the detection tokens. In this example, the detection pattern may be used to detect parts of the target text 11, within the maximum token distance of the detection pattern, where the detection tokens appear more than a predefined number of times.

For example, the exception pattern may be defined based on one or more exception tokens and the maximum token distance of the exception pattern. The maximum token distance of the exception pattern may refer to the maximum distance between the detection tokens and the exception tokens. In this example, the exception pattern may be used to exclude parts of the target text 11, within the maximum token distance of the exception pattern, where the exception tokens appear together with the detection tokens, as detection exceptions, and such parts of the target text 11 may be treated as not detected even if they match the detection pattern.

In another example, the exception pattern may be defined based further on the number of appearances of each of the exception tokens. In this example, the exception pattern may be used to exclude parts of the target text 11, within the maximum token distance of the exception pattern, where the exception tokens appear more than a predefined number of times, together with a detection token, as detection exceptions.

In another example, the detection pattern and the exception pattern may be defined based on a combination of the above-described examples or in various other methods than those set forth herein.

The term "pattern," as used herein, may also be referred to as a rule.

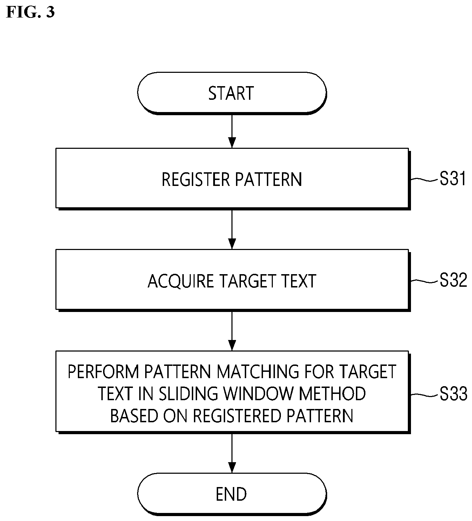

Specifically, the pattern detection system 10 may perform pattern matching for the target text 11 in a sliding window method. In other words, the pattern detection system 10 may perform pattern matching while moving a sliding window, without backtracking. In this manner, pattern detection may be resource-efficiently performed regardless of the frequency of appearance, in the target text 11, of tokens defined in the pattern 12 (or the number of partial matches). Also, as the amount of resources required for pattern detection is predictable, the utilization efficiency of the entire resources may be improved. Also, the stability of the pattern detection system 10 may be improved (for example, system failure that may be caused by a shortage of resources may be prevented in advance). This will be described later in further detail with reference to FIG. 3 and the subsequent figures.

The pattern detection system 10 may be implemented as at least one computing device. For example, all the functions of the pattern detection system 10 may be implemented in a single computing device, different functions of the pattern detection system 10 may be implemented in different computing devices, or a particular function of the pattern detection system 10 may be implemented in multiple computing devices.

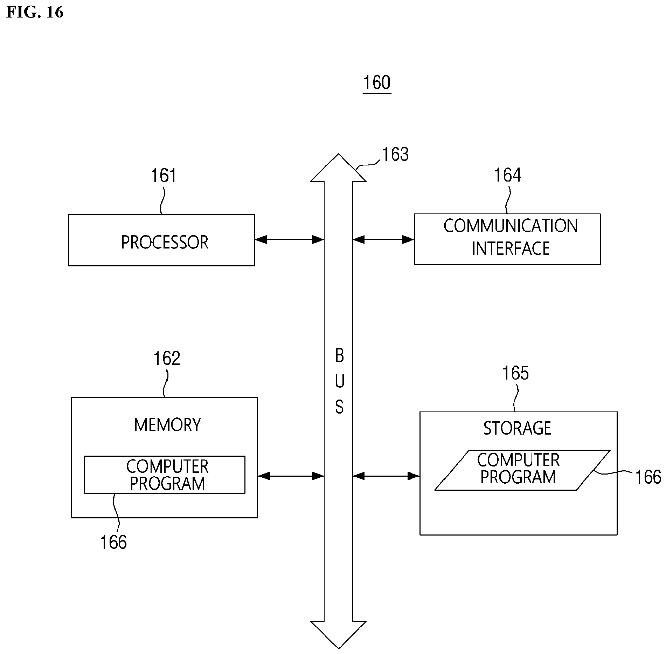

Here, the term "computing device" may encompass nearly all types of devices equipped with a computing function, and an exemplary computing device will be described later with reference to FIG. 16.

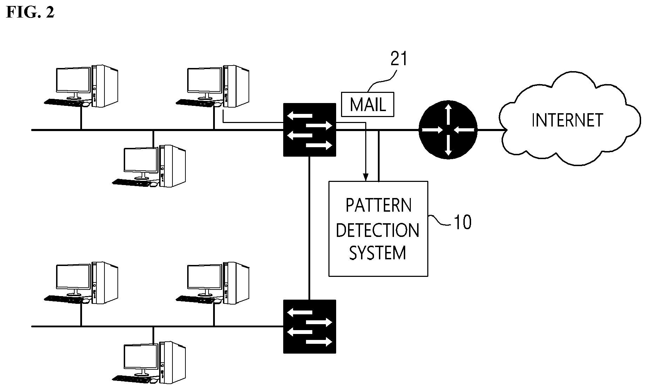

The pattern detection system 10 may be used in various fields (or domains) for various purposes. For example, referring to FIG. 2, the pattern detection system 10 may be employed in an in-house system (e.g., installed on an intranet) to detect any confidential, sensitive information, expressions (e.g., racist expressions) that may raise issues, or expressions that are incorrect from email 21, internal (or external) bulletin board posts, or internal (or general) documents. The pattern detection system 10 may highlight the detected parts 13 and 14 of the target text 11 and may provide the target text 11 with the detected parts 13 and 14 highlighted to a user. For example, the pattern detection system 10 may provide email 21 with detected parts highlighted to the sender of the email 21. The pattern detection system 10 may also be used to detect posts on a website that contain abusive, defamatory language, slander, and the like. The pattern detection system 10 may also be used to detect unsolicited advertisements, profanities, and the like from SNS messages. The pattern detection system 10 may be used in various fields for various purposes, almost without any limit.

Methods that may be performed in the pattern detection system 10 will hereinafter be described with reference to FIG. 3 and the subsequent figures.

For convenience, although not specifically mentioned, it is assumed that all steps and/or operations of each method that will hereinafter be described are performed by the pattern detection method 10. However, some of the steps and/or operations may actually be performed in a computing device other than the pattern detection method 10.

A pattern detection method according to some embodiments of the present disclosure will hereinafter be described with reference to FIGS. 3 through 9.

FIG. 3 is a flowchart illustrating a pattern detection method according to some embodiments of the present disclosure. The pattern detection method of FIG. 3, however, is merely exemplary, and obviously, some steps may be added to, or deleted from, the pattern detection method of FIG. 3.

Referring to FIG. 3, the pattern detection method may begin with S31, which is the step of registering a pattern. As already mentioned above, the registered pattern may include a detection pattern and an exception pattern.

In S32, target text may be acquired. As already mentioned above, the target text, which is a target to be subjected to target detection, may refer to entire given text or only part of the given text.

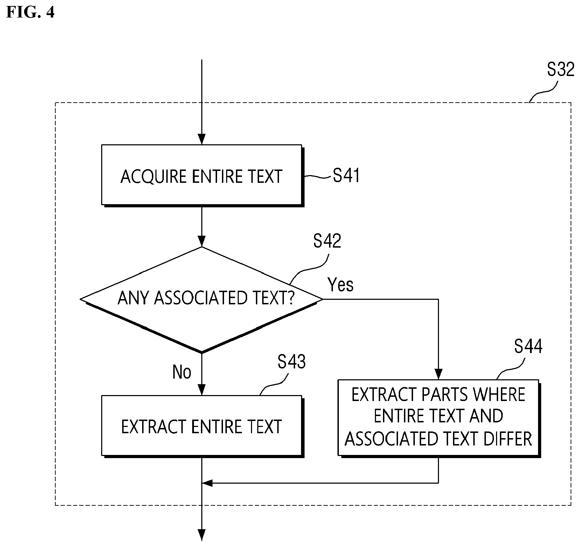

Specifically, referring to FIG. 4, the target text may be acquired by extracting entire given text or part of the given text. Specifically, if the entire given text is acquired (S41), the pattern detection system 10 may determine whether there exists any associated text based on meta information of the entire given text (S42). The meta information may be user action information (e.g., the type of user action such as a modification or creation or the time of the user action), file name information, version information, title information, or related user information (e.g., the sender or the receiver of email or the creator of a document), but the present disclosure is not limited thereto. The associated text may be text that has been subjected to pattern detection, but the present disclosure is not limited thereto. For example, if the text acquired in S41 is the text of a particular document, the pattern detection system 10 may determine whether there exists any associated document (e.g., a document of a previous version or an original document before modification) based on user action information, file name information, and version information of the particular document. In another example, if the text acquired in S41 is the text of a particular email, the pattern detection system 10 may determine whether there exists any associated email (e.g., previous email) based on the title, the sender, and the receiver of the particular email. Then, in response to a determination being made that there exists associated text, the pattern detection system 10 may compare the text acquired in S41 with the associated text and may extract parts of the text acquired in S41 that differ from the associated text as the target text (S44). In this case, the amount of text to be subjected to pattern detection may be considerably reduced, and as a result, pattern detection may be resource-efficiently performed. On the contrary, in response to a determination being made that there is no associated text, the entire text acquired in S41 may be extracted as the target text (S32).

Referring again to FIG. 3, in S33, pattern matching may be performed on the target text in the sliding window method using the registered pattern. For example, if the registered pattern is a detection pattern, the pattern detection system 10 may perform pattern matching while moving a sliding window over the target text (i.e., may perform matching between detection tokens and tokens of the target text). In this manner, pattern detection may be resource-efficiently performed at high speed without backtracking.

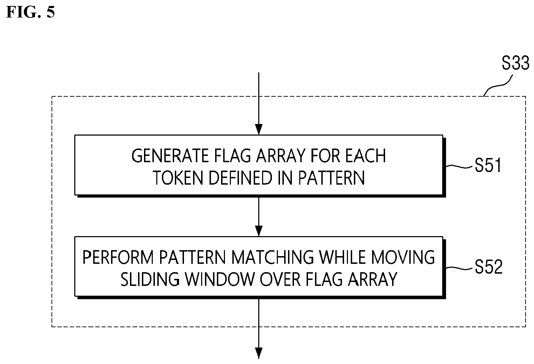

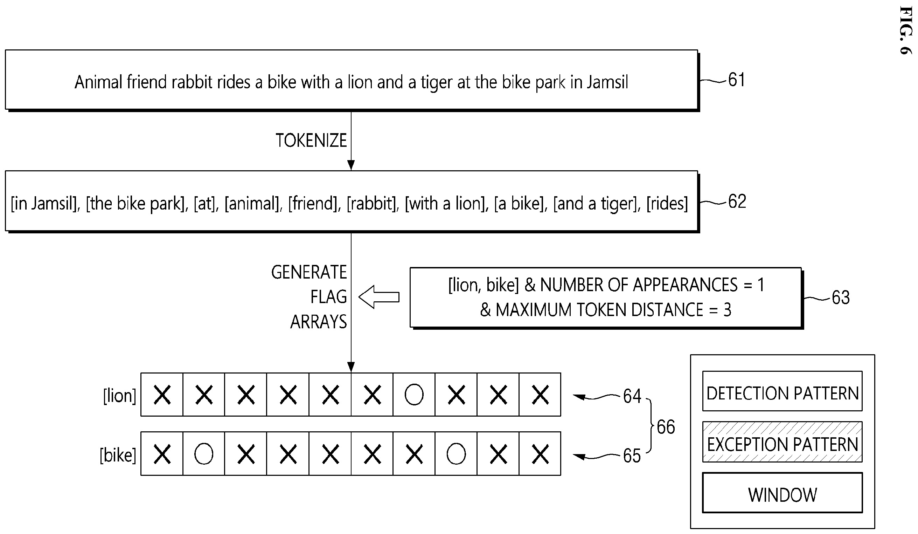

Specifically, referring to FIG. 5, flag arrays may be generated for the tokens defined in the registered pattern (S51), and pattern matching may be performed while moving the sliding window over the flag arrays (S52). Here, the flag arrays may refer to arrays of flags (e.g., hit flags and miss flags) having indexes corresponding to the tokens of the target text and indicating the results of token matching (i.e., the results of matching between the tokens defined in the registered pattern and the tokens of the target text). For example, the pattern detection system 10 may generate flag arrays for the detection tokens and may also generate flag arrays for the exception tokens. The pattern detection system 10 may perform pattern matching while moving the sliding window over the generated flag arrays. This will hereinafter be described in further detail with reference to FIGS. 6 through 9.

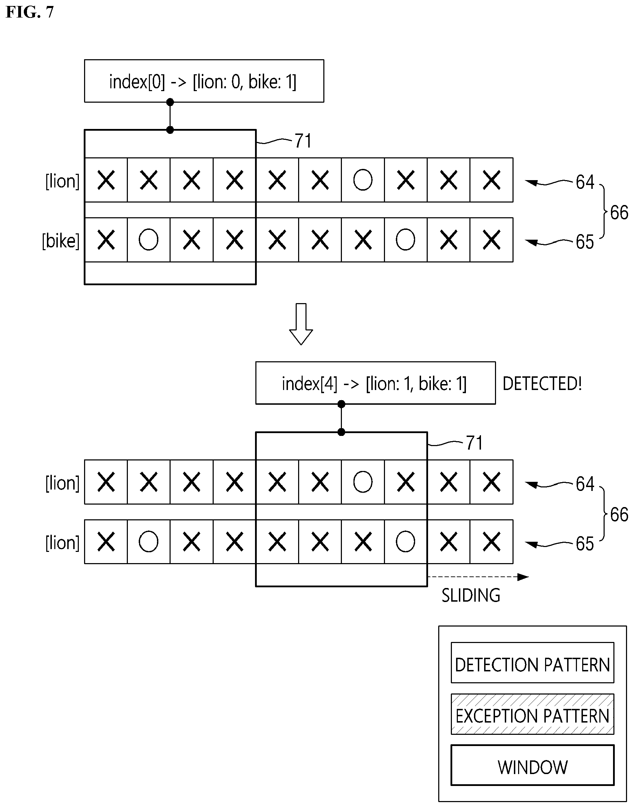

FIGS. 6 and 7 illustrate how to perform pattern matching in the sliding window method using a detection pattern 63. Specifically, FIG. 6 illustrates how to generate flag arrays 66 for the detection pattern 63, and FIG. 7 illustrates how to perform pattern matching on the flag arrays 66. Referring to FIGS. 6 and 7, it is assumed that the detection pattern 63 is defined to detect where the words "lion" and "bike" appear at least once within a maximum token distance of 3.

Referring to FIG. 6, the pattern detection system 10 may break down (or divide or split or tokenize or decompose) target text 61 into a plurality of tokens 62 to generate the flag arrays 66. FIG. 6 illustrates that the target text 61 is segmented based on interwork spaces, but the present disclosure is not limited thereto. The pattern detection system 10 may break down the target text 61 into tokens of the same text unit as that corresponding to the maximum token distance of the detection pattern 63. For example, if the maximum token distance of the detection pattern 63 refers to the distance between tokens in units of the word segment, the target text 61 may be broken down into tokens in units of the word segment unit (based on interwork spaces). The detection tokens may be of a different text unit from the tokens of the target text 61. In the example of FIG. 6, the detection tokens are words, and the tokens of the target text 61 may be word segments.

Thereafter, the pattern detection system 10 may generate first and second flag arrays 64 and 65 for first and second detection tokens (i.e., "lion" and "bike"), respectively. Specifically, the pattern detection system 10 may generate the first flag array 64 by matching the first detection token and the tokens 62 of the target text 61, and may generate the second flag array 65 by matching the second detection token and the tokens 62 of the target text 61.

Thereafter, referring to FIG. 7, the pattern detection system 10 may perform pattern matching while moving a sliding window over the flag arrays 66. The size of the sliding window 71 may be determined based on the maximum token distance of the detection pattern 63. For example, the size of the sliding window 71 may be determined to be the same as, or greater than, 1 added to the maximum token distance of the detection pattern 63. In this manner, matching for the detection pattern 63 may be performed quickly and accurately.

Specifically, the pattern detection system 10 may perform pattern matching with the sliding window 71 positioned at an index of 0 in each of the flag arrays 66, and the result of the pattern matching is as shown above the sliding window 71 in the upper part of FIG. 7. Then, when the pattern matching is complete, the sliding window 71 may be moved. For example, the pattern detection system 10 may determine whether there exists any hit flag (marked by the character "O") for the first detection token (i.e., "lion") in the sliding window 71, and may determine whether there exists any hit flag for the second detection token (i.e., "bike") in the sliding window 71 only if there is a hit flag for the first detection token. If there is no hit flag for the first detection token, the pattern detection system 10 may move the sliding window 71 without any further determination. In this manner, pattern matching may be more efficiently performed. However, the present disclosure is not limited to this.

FIG. 7 illustrates a case where parts that match the detection pattern 63 are detected when the sliding window 71 is positioned at an index of 4 in each of the flag arrays 66.

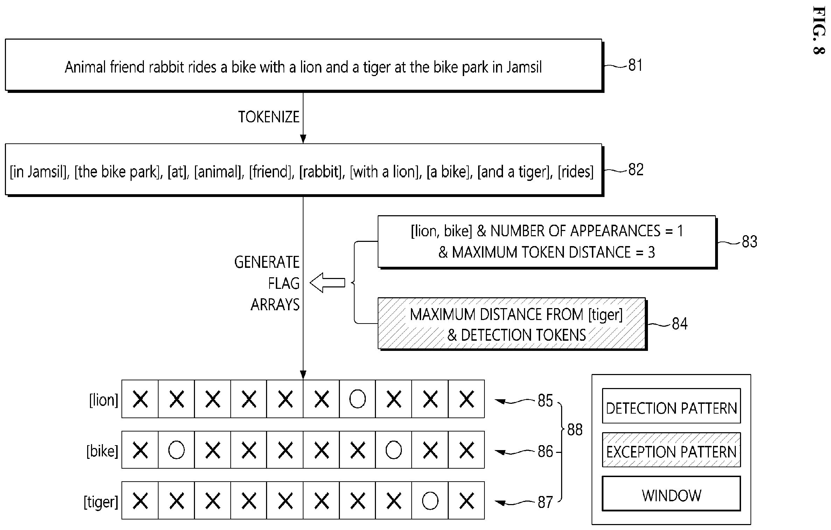

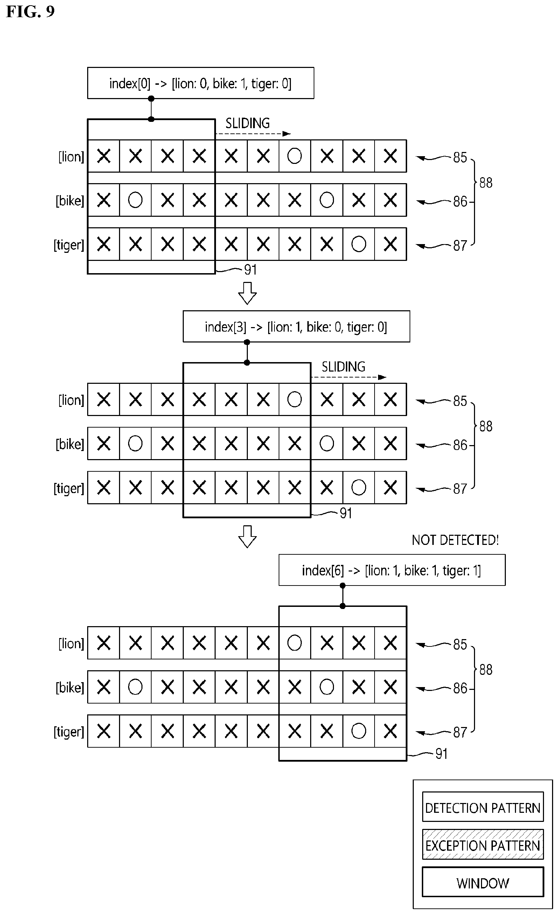

FIGS. 8 and 9 illustrate how to perform pattern matching in the sliding window method using a detection pattern 83 and an exception pattern 84. Specifically, FIG. 8 illustrates how to generate flag arrays 88 for two detection tokens (i.e., "lion" and "bike") and an exception token (i.e., "tiger"), and FIG. 9 illustrates how to perform pattern matching on the flag arrays 88. Referring to FIGS. 8 and 9, it is assumed that the exception pattern 84 is defined to exclude parts where the detection tokens and the exception token appear together within a maximum token distance of 3. The embodiment of FIGS. 8 and 9 will hereinafter be described, focusing mainly on the differences with the embodiment of FIGS. 6 and 7.

Referring to FIG. 8, the pattern detection system 10 may divide target text 81 into a plurality of tokens 82 and may generate flag arrays 85 and 86 for the detection tokens and a flag array 87 for the exception token.

Referring to FIG. 9, the pattern detection system 10 may perform pattern matching while moving a sliding window 91 over the flag arrays 88. The size of the sliding window 91 may be determined based on whichever of the maximum token distance of the detection pattern 83 and the maximum token distance of the exception pattern 84 is greater than the other maximum token distance. For example, the size of the sliding window 91 may be determined to be the same as, or greater than, 1 added to whichever of the maximum token distance of the detection pattern 83 and the maximum token distance of the exception pattern 84 is greater than the other maximum token distance. In this manner, matching for the detection pattern 83 and the exception pattern 84 may be performed quickly and accurately.

Specifically, the pattern detection system 10 may perform pattern matching with the sliding window 91 positioned at an index of 0 in each of the flag arrays 88 and may move the sliding window 91 when the pattern matching is complete. For example, the pattern detection system 10 may determine whether there exists any hit flag for each of the detection tokens (i.e., "lion" and "bike") in the sliding window 91, and may determine whether there exists any hit flag for the exception token (i.e., "tiger") in the sliding window 91, only if there are hit flags for the detection tokens. On the contrary, if there are no hit flags for the detection tokens, the pattern detection system 10 may move the sliding window 91 without any further determination. In this manner, pattern matching may be more efficiently performed. However, the present disclosure is not limited to this.

FIG. 9 illustrates a case where parts that match the detection pattern 83 are detected when the sliding window 91 is positioned at an index of 6 in each of the flag arrays 88, but are excluded as detection exceptions (or treated as if not detected) because they also match the exception pattern 84.

According to the pattern detection method of FIG. 3, the amount of resources required for pattern detection may be predicted, and this will hereinafter be described.

If target text has N tokens and there are K detection tokens and E exception tokens, the temporal complexity of the pattern detection method of FIG. 3 may be approximately N(K+E) because the pattern detection method of FIG. 3 involves repeatedly determining whether the K detection tokens and the E exception tokens exist in a sliding window (e.g., the sliding window 91), while moving the sliding window about N times. This shows that the amount of processing resources required for pattern detection does not change with the number of partial matches (i.e., the number of appearances of each of the detection tokens in the target text), and thus, the amount of processing resources required for pattern detection may be predicted. For example, the amount of processing resources required for pattern detection may be predicted based on the number of tokens of the target text, the number of detection tokens (i.e., the number of detection tokens defined in a previously-registered detection pattern), and the number of exception tokens.

If the target text has a data size of T, the number of tokens of the target text is N, the number of detection tokens is K, and the number of exception tokens is E, the spatial complexity of the pattern detection method of FIG. 3 may be approximately (T+N(K+E)) because a memory of about T bytes (or bits) is needed to load the target text and a memory of about N(K+E) bytes (or bits) is needed to generate a flag array for each of the K detection tokens and the E exception tokens. This shows that the amount of processing resources required for pattern detection does not change with the number of partial matches (i.e., the number of appearances of each of the detection tokens in the target text), and thus, the amount of processing resources required for pattern detection may be predicted. For example, the amount of resources required for pattern detection may be predicted based on the data size of the target text, the number of tokens of the target text, the number of detection tokens (i.e., the number of detection tokens defined in the previously-registered detection pattern), and the number of exception tokens.

According to the pattern detection method of FIGS. 3 through 9, pattern detection may be performed on target text in the sliding window method without backtracking. Accordingly, pattern detection may be resource-efficiently performed. Also, as the amount of resources required for pattern detection does not change with the number of partial matches, the amount of resources required for pattern detection may be predicted easily and accurately before pattern detection, the efficiency of use of resources may be considerably improved (i.e., the amount of idle resources may be minimized), and the degradation of system stability that may be caused by a shortage of resources may be addressed. Also, by generating a flag array for each token defined in a pattern and performing pattern matching on the flag array in the sliding window method, pattern detection may be performed at high speed, and the amount of resources required for pattern detection may be reduced.

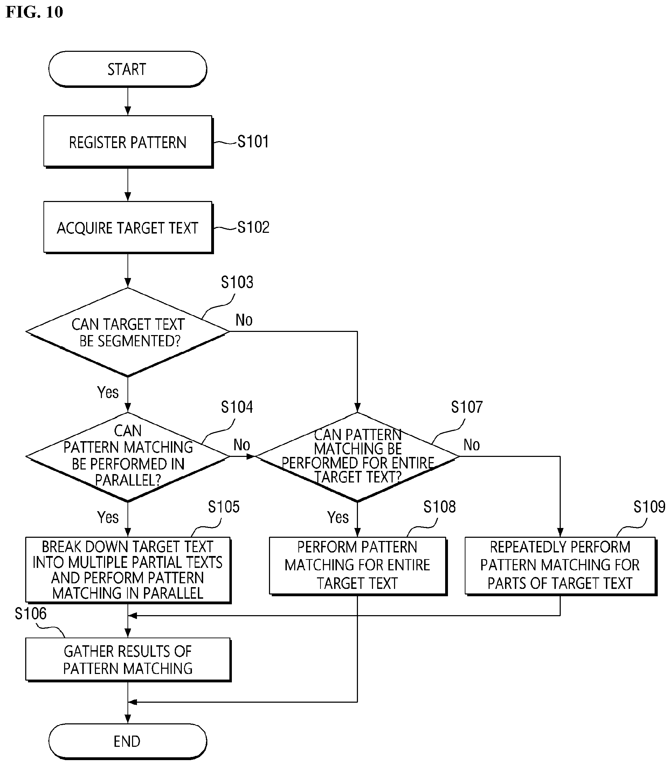

A pattern detection method according to some embodiments of the present disclosure will hereinafter be described with reference to FIGS. 10 through 14, focusing mainly on the differences with the previous embodiments.

FIG. 10 is a flowchart illustrating a pattern detection method according to some embodiments of the present disclosure. The pattern detection method of FIG. 10, however, is merely exemplary, and obviously, some steps may be added to, or deleted from, the pattern detection method of FIG. 10.

The embodiment of FIG. 10 relates to how to perform pattern matching in parallel, or not in parallel, depending on the state of resources. For example, when there is a plenty of resources, the speed of pattern detection may be improved by performing pattern matching in parallel, and when there is an insufficient amount of resources, system failure that may be caused by a shortage of resources may be prevented in advance by performing pattern matching not in parallel.

Specifically, referring to FIG. 10, the pattern detection method may begin with S 101, which is the step of registering a pattern. As already mentioned above, the registered pattern may include a detection pattern and an exception pattern.

In S102, target text may be acquired (for more information, see S32 of FIG. 3).

In S103, a determination is made as to whether the target text may be segmented. Then, in response to a determination being made that the target text may be segmented, the pattern detection method proceeds to S 104, and in response to a determination being made that the target text cannot be segmented, the pattern detection method proceeds to S107.

A determination may be made as to whether the target text may be segmented, based on the number of tokens of the target text and the size of a sliding window. For example, if the number of tokens of the target text is less than a reference value, the pattern detection system 10 may determine that the target text cannot be segmented, and if the number of tokens of the target text is the same as, or greater than the reference value, the pattern detection system 10 may determine that the target text may be segmented. The reference value may be determined based on the size of the sliding window. For example, the reference value may be set to be greater than the size of the sliding window (e.g., twice the size of the sliding window). It will be described later why the size of the sliding window is taken into consideration to determine whether the target text may be segmented.

In S104, a determination may be made as to whether pattern matching may be performed in parallel based on the state of resources. Then, in response to a determination being made that the pattern matching may be performed in parallel, the pattern detection method proceeds to S106, and in response to a determination being made that the pattern matching cannot be performed in parallel, the pattern detection method proceeds to S107.

For example, the pattern detection system 10 may determine that pattern matching may be performed in parallel, if there is a plenty of both processing and memory resources. Specifically, if there are two or more available worker nodes and the amount of resources required for pattern matching is greater than the amount of currently available resources, the pattern detection system 10 may determine that pattern matching may be performed in parallel. However, the present disclosure is not limited to this. Here, the worker nodes may refer to processing units (or modules) implemented based on threads, processes, or processors (e.g., central processing unit (CPU) cores).

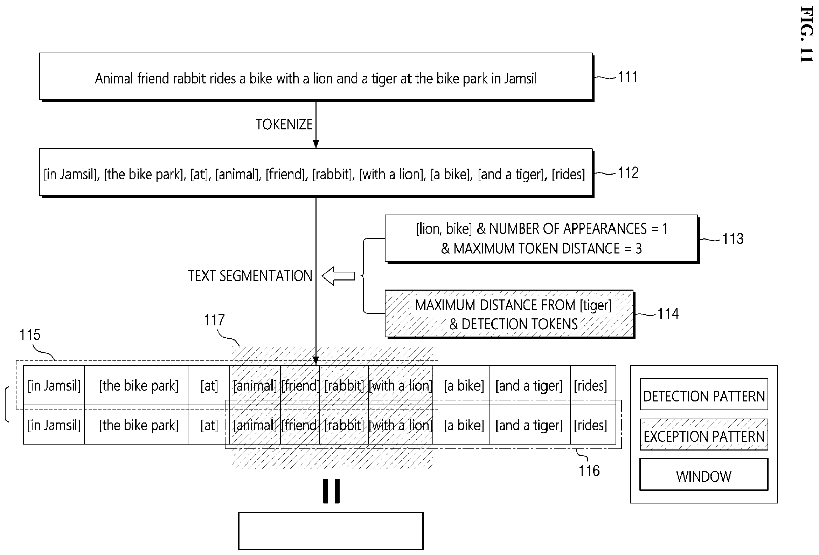

In S105, the target text may be broken down into a plurality of partial texts, and pattern matching may be performed in parallel on the partial texts. S105 will be described later with reference to FIGS. 11 through 14.

In S106, the results of pattern matching performed on the partial texts may be gathered.

In S107, a determination may be made as to whether pattern matching may be performed for the entire target text based on the state of memory resources. Then, in response to a determination being made that pattern matching may be performed for the entire target text, the pattern detection method proceeds to S108, and in response to a determination being made that pattern matching cannot be performed for the entire target text, the pattern detection method proceeds to S109.

For example, the pattern detection system 10 may predict the amount of memory resources required for pattern matching (particularly, text segmentation and pattern matching) and may determine that pattern matching may be performed for the entire target text if the predicted amount of memory resources is less than the amount of currently available memory resources. A method to predict the amount of memory resources required for pattern detection is as described above with regard to spatial complexity. On the contrary, if the predicted amount of memory resources is greater than the amount of currently available memory resources, the pattern detection system 10 may determine that pattern matching cannot be performed for the entire target text.

In S108, patten matching may be performed for the entire target text. For example, the pattern detection system 10 may generate flag arrays for the entire target text and may perform pattern matching while moving the sliding window over the flag arrays.

In S109, pattern matching may be performed repeatedly on parts of the target text. For example, the pattern detection system 10 may perform a first pattern matching process on a first partial text of the target text (by, for example, loading only flag arrays for the first partial text in a memory and performing pattern matching) and may perform a second pattern matching process on a second partial text of the target text when the first pattern matching process is complete. The length (or size) of the partial texts of the target text may be determined based on the amount of currently available memory resources.

It will hereinafter be described in further detail how to perform pattern matching in parallel with reference to FIGS. 11 through 14. The embodiment of FIGS. 11 through 14 will hereinafter be described, focusing mainly on the differences with the previous embodiments.

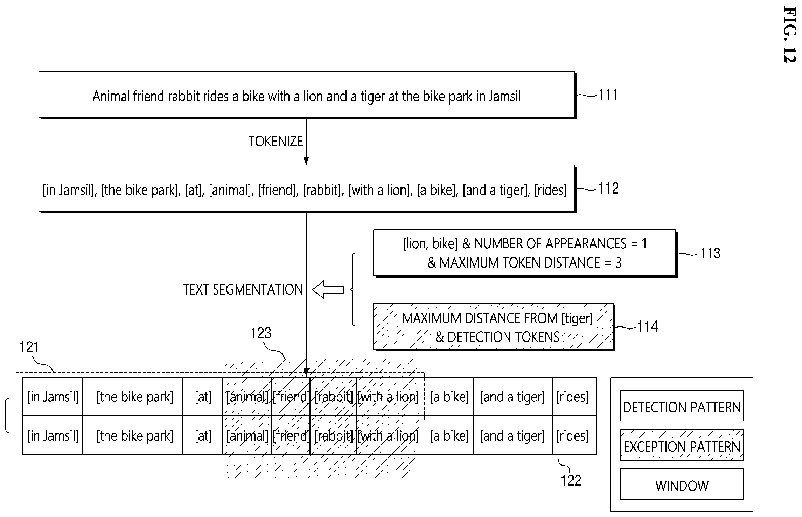

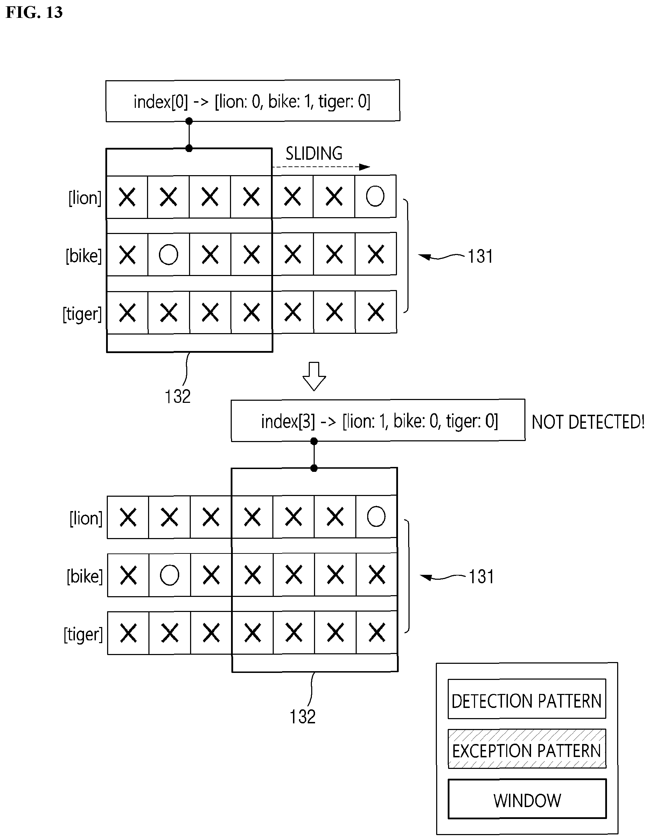

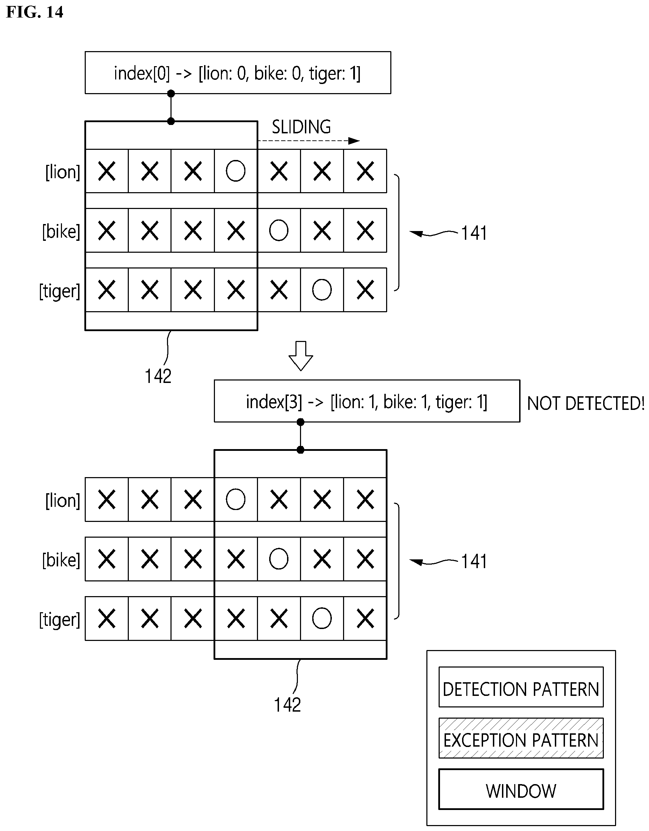

FIGS. 11 and 12 illustrate how to segment target text 111 into first and second partial texts 115 and 116, and FIGS. 13 and 14 illustrate how to perform pattern matching in parallel for the first and second partial texts 115 and 116. Referring to FIGS. 11 through 14, a detection pattern 113 and an exception pattern 114 may be the same as their respective counterparts of any one of the previous embodiments.

Referring to FIG. 11, the pattern detection system 10 may determine the size of a sliding window (e.g., a size of 4) based on the maximum token distance of each of the detection pattern 113 and the exception pattern 114. Thereafter, the pattern detection system 10 may segment the target text 111 such that at least some tokens of the target text 111 overlap between the first and second partial texts 115 and 116 as overlap tokens 117. For example, the pattern detection system 10 may divide the target text 111 into a plurality of tokens 112, and the tokens 112 may be distributed between the first and second partial texts 115 and 116 such that at least some of the tokens 112 may overlap between the first and second partial texts 115 and 116 as the overlap tokens 117. The first and second partial texts 115 and 116 may refer to groups of consecutive tokens.

The number of overlap tokens 117 may be determined based on the size of the sliding window. For example, as illustrated in FIG. 11, the number of tokens 117 may be determined to be the same as, or greater than, the size of the sliding window. Alternatively, as illustrated in FIG. 12, the number of overlap tokens 123 may be determined to be 1 subtracted from the size of a sliding window. The number of overlap tokens 117 (or 123) may be determined based on the size of the sliding window to ensure uniformity between the result of pattern matching for the first and second partial texts 115 and 116 (or first and second partial texts 121 and 122 of FIG. 12) and the result of pattern matching for the entire target text 111.

A determination may be made (in S103 of FIG. 10) that the target text 111 may be segmented if the number of tokens of the target text 111 is greater than a reference value set based on the size of the sliding window, in consideration of the number of overlap tokens 117 (or 123). In other words, parallel pattern matching may not be efficient unless the number of tokens of the target text 111 exceeds the reference value (because most of the tokens of each partial text of the target text 111 are overlap tokens).

The target text 111 will hereinafter be described as being broken down into the first and second partial texts 115 and 116, as illustrated in FIG. 11.

Thereafter, referring to FIGS. 13 and 14, the pattern detection system 10 may generate flag arrays 131 for the first partial text 115 and flag arrays 141 for the second partial text 116. The generation of the flag arrays 131 and the generation of the flag arrays 141 may be performed in parallel by different worker nodes (e.g., processes, processors, or threads).

Thereafter, as illustrated in FIGS. 13 and 14, the pattern detection system 10 may perform pattern matching in parallel while moving a sliding window 132 over the flag arrays 131 and a sliding window 142 over the flag arrays 141. For example, the pattern detection system 10 may perform pattern matching for the first partial text 115 and pattern matching for the second partial text 116 at the same time in a first node and a second node, respectively, using the flag arrays 131 and the flag arrays 141, respectively.

In the example of FIGS. 13 and 14, like in the example of FIG. 9, the results of pattern matching show that no pattern is detected from the target text 111 due to the exception pattern 114.

According to the pattern detection method of FIGS. 10 through 14, the speed of pattern detection, the efficiency of use of resources, and system stability may all be improved by performing pattern matching for target text in parallel or not in parallel in consideration of the state of resources. For example, if there is a plenty of processing and memory resources available, the target text may be broken down into a plurality of partial texts, and pattern matching may be performed in parallel for the plurality of partial texts, thereby improving the speed of pattern detection and the efficiency of use of the resources. On the contrary, if the amount of available processing and memory resources is insufficient, pattern matching may be performed not in parallel on the target text (i.e., pattern matching may be performed repeatedly on parts of the target text), thereby improving system stability.

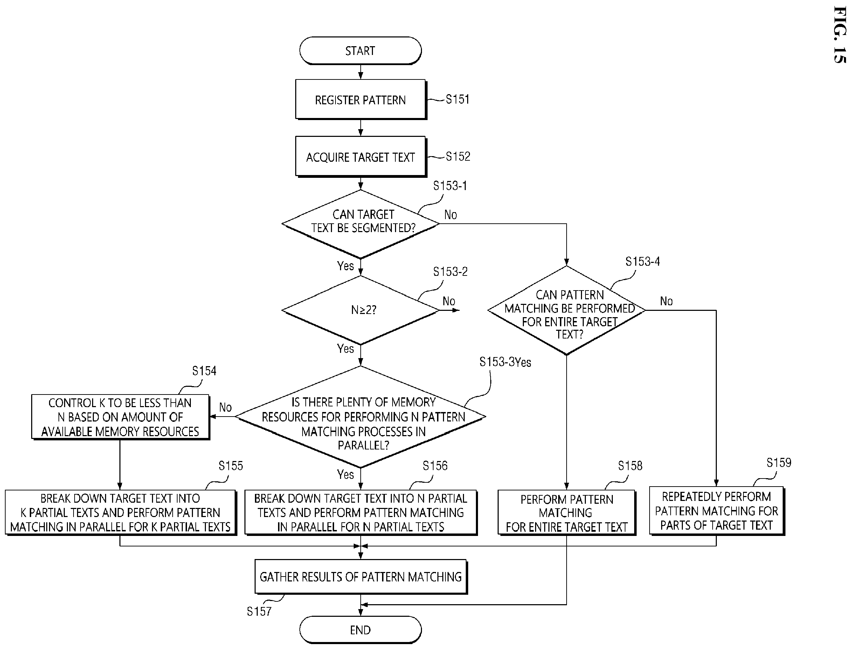

A pattern detection method according to some embodiments of the present disclosure will hereinafter be described with reference to FIG. 15, focusing mainly on the differences with the previous embodiments.

FIG. 15 is a flowchart illustrating a pattern detection method according to some embodiments of the present disclosure. The pattern detection method of FIG. 15, however, is merely exemplary, and obviously, some steps may be added to, or deleted from, the pattern detection method of FIG. 15.

The embodiment of FIG. 15 may be understood as being a more detailed version of the pattern detection method of FIG. 10.

Referring to FIG. 15, in S151, a pattern may be registered, and in S152, target text may be acquired (for more information, see S101 and S102 of FIG. 10).

In S153-1, a determination may be made as to whether the target text may be segmented (for more information, see S103 of FIG. 10). Then, in response to a determination being made that the target text may be segmented, the pattern detection method proceeds to S153-2, and in response to a determination being made that the target text cannot be segmented, the pattern detection method proceeds to S153-4.

In S153-2, a determination may be made as to whether a number N of available worker nodes is 2 or greater. S153-2 may be understood as being the step of determining whether pattern matching may be performed in parallel. Then, the pattern detection method proceeds to S153-3 or S153-4 depending on the result of the determination performed in S153-2.

In some embodiments, if the number N of available worker nodes is less than 2, the pattern detection system 10 may stand by until the number N of available worker nodes becomes 2 or greater. For example, the pattern detection system 10 may monitor the number N of available worker nodes for a predetermined standby time, and may perform pattern matching in parallel (in S153-3 and S154) if the number N of available worker nodes becomes 2 or greater within the predetermined standby time. If the number N of available worker nodes does not become 2 or greater within the predetermined standby time, the pattern detection system 10 may perform S153-4.

In S153-3, a determination may be made as to whether there is a sufficient amount of memory resources for performing N pattern matching processes (where N is a natural number of 2 or greater) in parallel. Then, the pattern detection method proceeds to S154 or S156 depending on the result of the determination performed in S153-3.

For example, the pattern detection system 10 may predict the amount of memory resources required for performing N pattern matching processes, and may determine that there is a sufficient amount of memory resources if the predicted amount of memory resources is the same as, or greater than, the amount of available memory resources.

In S154, a number K of partial texts that the target text is to be broken down into (where K is a natural number of 2 or greater and is less than N) may be controlled based on the amount of available memory resources. That is, the number K of partial texts may be understood as being determined based on the number of available worker nodes and the amount of available memory resources.

In S155, the target text may be broken down into K partial texts, and pattern matching may be performed in parallel for the K partial texts (for more information, see S105 of FIG. 10). That is, the pattern detection system 10 may perform pattern matching in parallel for the K partial texts in K worker nodes.

In S156, the target text may be broken down into N partial texts, and pattern matching may be performed in parallel for the N partial texts (for more information, see S105 of FIG. 10). That is, the pattern detection system 10 may perform pattern matching in parallel for the N partial texts in N worker nodes.

In S157, the results of pattern matching for the partial texts of the target text may be gathered.

In S153-4, a determination may be made as to whether pattern matching may be performed for the entire target text (for more information, see S107 of FIG. 10). Then, the pattern detection method proceeds to S158 or S159 depending on the result of the determination performed in S153-4.

In S158, pattern matching may be performed for the entire target text (for more information, see S108 of FIG. 10).

In S159, pattern matching may be performed repeatedly on parts of the target text (for more information, see S 109 of FIG. 10).

According to the pattern detection method of FIG. 15, the speed of pattern detection, the efficiency of use of resources, and system stability may all be improved by performing pattern matching for target text in parallel or not in parallel in consideration of the state of resources.

An exemplary computing device that may implement the pattern detection system 10 will hereinafter be described with reference to FIG. 16.

FIG. 16 is a hardware configuration view of a computing device 160.

Referring to FIG. 16, the computing device 160 may include at least one processor 161, a bus 163, a communication interface 164, a memory 162, which loads a computer program 166 to be executed by the processor 161, and a storage 165, which stores the computer program 166. FIG. 16 illustrates only components of the computing device 160 that are associated with the present disclosure, but obviously, the computing device 160 may further include various other general-purpose components. That is, the computing device 160 may also include various components in addition to those illustrated in FIG. 16. Also, in some embodiments, some of the components illustrated in FIG. 16 may be omitted from the computing device 160. The elements of the computing device 160 will hereinafter be described.

The processor 161 may control the general operations of the other elements of the computing device 160. The processor 161 may be configured to include at least one of a CPU, a microprocessor unit (MPU), a microcontroller unit (MCU), a graphics processing unit (GPU), and another arbitrary processor that is already well known in the art to which the present disclosure pertains. The processor 161 may perform an operation for at least one application or program for executing operations and/or methods according to some embodiments of the present disclosure. The computing device 160 may include at least one processor 161.

The memory 162 may store various data, commands, and/or information. The memory 162 may load the computer program 166 from the storage 165 to execute the operations and/or methods according to some embodiments of the present disclosure. The memory 162 may be implemented as a volatile memory such as a random-access memory (RAM), but the present disclosure is not limited thereto.

The bus 163 may provide a communication function between the other elements of the computing device 160. The bus 163 may be implemented as an address bus, a data bus, a control bus, or the like.

The communication interface 164 may support wired/wireless Internet communication for the computing device 160. The communication interface 164 may also support various communication methods other than Internet communication. To this end, the communication interface 164 may be configured to include a communication module that is well known in the art to which the present disclosure pertains.

The storage 165 may non-transitorily store at least one computer program 166. The storage 165 may be configured to include a nonvolatile memory such as a read-only memory (ROM), an erasable programmable ROM (EPROM), an electrically erasable programmable ROM (EEPROM), or a flash memory, a hard disk, a removable disk, or another arbitrary computer-readable recording medium that is well known in the art to which the present disclosure pertains.

The computer program 166 may include one or more instructions that allow the processor 161 to perform the operations and/or methods according to some embodiments of the present disclosure, when loaded in the memory 162. That is, the processor 161 may perform the operations and/or methods according to some embodiments of the present disclosure by executing the loaded instructions.

For example, the computer program 166 may include one or more instructions for performing the operations of: registering a detection pattern; acquiring target text; and performing pattern matching for the target text based on the detection pattern in the sliding window method. In this example, the pattern detection system 10 may be implemented by the computing device 160.

The computing device 160 that may implement the pattern detection system 10 has been described so far with reference to FIG. 16.

In some embodiments, the pattern detection system 10 may be implemented as at least one virtual machine based on cloud technology. For example, the pattern detection system 10 may be implemented as at least one virtual machine run on multiple physical servers included in a server farm. In this example, at least some of the elements of the computing device 160 may refer to virtual hardware.

Embodiments of the present disclosure have been described above with reference to FIGS. 1 through 16, but the present disclosure is not limited thereto and may be implemented in various different forms. It will be understood that the present disclosure may be implemented in other specific forms without changing the technical spirit or gist of the present disclosure. Therefore, it should be understood that the embodiments set forth herein are illustrative in all respects and not limiting.

The technical features of the present disclosure described so far may be embodied as computer readable codes on a computer readable medium. The computer readable medium may be, for example, a removable recording medium (CD, DVD, Blu-ray disc, USB storage device, removable hard disk) or a fixed recording medium (ROM, RAM, computer equipped hard disk). The computer program recorded on the computer readable medium may be transmitted to other computing device via a network such as internet and installed in the other computing device, thereby being used in the other computing device.

Although operations are shown in a specific order in the drawings, it should not be understood that desired results may be obtained when the operations must be performed in the specific order or sequential order or when all of the operations must be performed. In certain situations, multitasking and parallel processing may be advantageous. According to the above-described embodiments, it should not be understood that the separation of various configurations is necessarily required, and it should be understood that the described program components and systems may generally be integrated together into a single software product or be packaged into multiple software products.

According to the aforementioned and other embodiments of the present disclosure, pattern detection may be performed for target text in a sliding window method, without backtracking. Accordingly, pattern detection may be resource-efficiently performed. Also, as the amount of resources required for pattern detection does not change with the number of partial matches, the amount of resources required for pattern detection may be predicted easily and accurately before pattern detection, the efficiency of use of resources may be considerably improved (i.e., the amount of idle resources may be minimized), and the degradation of system stability that may be caused by a shortage of resources may be addressed.

Also, by generating a flag array for each token defined in a pattern and performing pattern matching on the flag array in the sliding window method, pattern detection may be performed at high speed, and the amount of resources required for pattern detection may be reduced (i.e., pattern detection may be resource-efficiently performed).

Also, pattern detection may be further resource-efficiently performed by extracting parts of given text that differ from any associated text as target text for pattern detection.

Also, the speed of pattern detection, the efficiency of use of resources, and system stability may all be improved by performing pattern matching for target text in parallel or not in parallel in consideration of the state of resources. For example, if there is a plenty of processing and memory resources available, the target text may be broken down into a plurality of partial texts, and pattern matching may be performed in parallel for the plurality of partial texts, thereby improving the speed of pattern detection and the efficiency of use of the resources. On the contrary, if the amount of available processing and memory resources is insufficient, pattern matching may be performed not in parallel on the target text (i.e., pattern matching may be performed repeatedly on parts of the target text), thereby improving system stability.

Also, the accuracy of pattern detection may be further improved using both a detection pattern and an exception pattern. For example, by using a detection pattern and an exception pattern associated with the detection pattern, unnecessary parts of the target text may be prevented in advance from being detected.

It should be noted that the effects of the present disclosure are not limited to those described above, and other effects of the present disclosure will be apparent from the following description.

In concluding the detailed description, those skilled in the art will appreciate that many variations and modifications may be made to the example embodiments without substantially departing from the principles of the present disclosure. Therefore, the disclosed example embodiments of the disclosure are used in a generic and descriptive sense only and not for purposes of limitation.

## Claims

1. A method for detecting a pattern, performed in at least one computing device, the method comprising:
registering a detection pattern, the detection pattern being a pattern defined to detect where detection tokens appear within a maximum token distance;
acquiring target text; and
performing pattern matching for the target text based on the detection pattern by using a sliding window.

2. The method of claim 1, wherein the detection pattern is defined based on a number of appearances of each of the detection tokens.

3. The method of claim 1, wherein the acquiring the target text comprises:
acquiring entire text, and determining whether there exists any associated text based on meta information of the entire text; and
based on determining that there exists the associated text, extracting at least a part of the entire text that differ from the associated text as the target text.

4. The method of claim 1, wherein a size of the sliding window is determined based on the maximum token distance.

5. The method of claim 1, wherein the performing the pattern matching comprises:
generating flag arrays for the detection tokens, wherein the flag arrays has indexes corresponding to tokens of the target text and include elements showing results of matching between the detection tokens and the target text; and
performing the pattern matching while moving the sliding window over the flag arrays.

6. The method of claim 1, wherein the performing the pattern matching comprises:
dividing the target text into a plurality of partial texts, including a first partial text and a second partial text; and
performing pattern matching in parallel for the plurality of partial texts.

7. The method of claim 6, wherein the dividing the target text comprises:
dividing the target text such that at least some of tokens of the target text overlap between the first partial text and the second partial text as overlap tokens, and
wherein a number of the overlap tokens is determined based on a size of the sliding window.

8. The method of claim 6, wherein the dividing the target text comprises:
dividing the target text based on a determination that a number of tokens of the target text is greater than or equal to a reference value, and
wherein the reference value is determined based on a size of the sliding window.

9. The method of claim 6, wherein the dividing the target text comprises:
dividing the target text based on a determination that an amount of available processing resources and an amount of available memory resources are both greater than or equal to a reference value.

10. The method of claim 6, wherein a number of the plurality of partial texts of the target text is determined based on a number of available worker nodes and a number of available memory resources.

11. The method of claim 1, wherein the performing the pattern matching comprises:
predicting an amount of memory resources required for performing pattern matching for N partial texts (where N is a natural number of 2 or greater) based on a determination that there are N available worker nodes;
controlling a number of partial texts of the target text to be K (where K is a natural number of 2 or greater and is less than N) in response to a determination that the predicted amount of memory resources exceeds an amount of available memory resources;
dividing the target text into K partial texts; and
performing pattern matching in parallel for the K partial texts using K available worker nodes.

12. The method of claim 1, wherein the performing the pattern matching comprises:
predicting an amount of memory resources required for performing pattern matching for N partial texts (where N is a natural number of 2 or greater) based on a determination that there are N available worker nodes;
dividing the target text into N partial texts based on a determination that the predicted amount of memory resources is less than or equal to an amount of available memory resources; and
performing pattern matching in parallel for the N partial texts using N available worker nodes.

13. The method of claim 1, wherein the performing the pattern matching comprises:
predicting an amount of memory resources required for performing pattern matching for entire target text;
performing first pattern matching for first partial text of the target text based on a determination that the predicted amount of memory resources exceeds an amount of available memory resources; and
performing second pattern matching for second partial text of the target text based on the first pattern matching being complete.

14. The method of claim 1, wherein the maximum token distance is a first maximum token distance, and
wherein the performing the pattern matching comprises:
registering, as an exception for the detection pattern, an exception pattern where at least one of the detection tokens appears together with an exception token within a second maximum token distance; and
performing the pattern matching using the detection pattern and the exception pattern.

15. The method of claim 14, wherein a size of the sliding window is determined based on a larger value of the first maximum token distance and the second maximum token distance.
